# EUROPEAN PATENT APPLICATION

(11) **EP 4 451 163 A1**
(43) Date of publication of application: **23.10.2024**
(21) Application number: 24171285.0
(22) Date of filing: 19.04.2024
(51) Int. Cl.: G06F 30/17, B29C 64/00, G05B 19/4097, G06F 111/20, G06F 113/10

(54) **ADDITIVE MANUFACTURING METHOD**

(30) Priority: 21.04.2023 IT 202300007977
(71) Applicant: C.M.S. S.p.A., 24019 Zogno (BG) (IT); Egalware S.r.l., 24068 Seriate (BG) (IT)
(72) Inventor: VIMERCATI, Claudio Giuseppe, 24010 Costa Serina (BG) (IT); BARERA, Giacomo, 20010 Bernate Ticino (MI) (IT); SASSI, Emmanuele, 24060 Bagnatica (BG) (IT); PERDONCIN, Sara, 24020 Villa Di Serio (BG) (IT)
(74) Representative: Luppi Intellectual Property S.r.l.

(57) **Abstract**

An additive manufacturing method is disclosed that comprises the steps of storing a library of geometric entities, selecting a geometric entity and intersecting the geometric entity with a basic 3D model to obtain an intermediate 3D model that comprises a portion that is inside a volume of the basic 3D model and a protruding portion that protrudes beyond the aforesaid volume and which will not be considered to be a part to be printed, to obtain a working 3D model that is supplied to slicing software that converts the 3D working model into commands for a printing path of an additive manufacturing machine.

## Description

### Background of the invention

The invention relates to an additive manufacturing method for manufacturing an object from a computer 3D model, in particular an additive manufacturing method that uses a screw extruder (screw extrusion additive manufacturing) that is supplied with a thermoplastic material (pure or reinforced with carbon fibres, glass fibres, etc) in granulate form.

Specifically, but not exclusively, the invention can be applied in the field of so-called Large Format Additive Manufacturing (LFAM).

The prior art comprises additive manufacturing methods that use software, so-called slicing software, suitable for converting a 3D object model into instructions for an additive manufacturing machine (in particular, a 3D printer that dispenses a bead of material by extrusion) by generating a printing path, or path of the tool of the machine.

Slicing software generally divides the 3D model into superimposed layers and then associates a movement of a tool of the machine (in particular, of an extrusion nozzle) with each layer. The movement commands for the various layers are sent by the slicing software to the additive manufacturing machine, together with other commands relating for example to the temperature and speed of the extruder.

Various aspects of the prior art are improvable.

Firstly, it is desirable to simplify the work necessary for performing CAD modelling for slicing software that is usable to command an additive manufacturing machine, in particular allowing relatively non-complex geometric elements to be used.

Further, it would be desirable to enable the programming time for CAD modelling for slicing software to be reduced.

### Summary of the invention

One object of the invention is to provide an alternative solution to the problem of obtaining a working 3D model for slicing software that will generate a printing path for an additive manufacturing machine.

One object of the invention is to allow 3D modelling that is able to overcome the aforesaid limits and drawbacks of the prior art.

One advantage is to allow 3D modelling for slicing software in which it is possible to use relatively non-complex geometries.

One advantage is to significantly reduce the programming time for programming 3D modelling for slicing software.

Such objects and advantages, and still others, are achieved by an additive manufacturing method according to one or more of the claims set out below.

In one embodiment, an additive manufacturing method comprises the steps of selecting a geometric entity included in a library of geometric entities and of intersecting the selected geometric entity with a basic 3D model to obtain an intermediate 3D model that comprises a portion of the geometric entity that is included inside a volume of the basic 3D model and a protruding portion of the geometric entity that protrudes beyond the aforesaid volume, and in which said protruding portion is not considered to be a part to be printed, to obtain a working 3D model that is then supplied to a slicing software that will convert the working 3D model into commands of a printing path for an additive manufacturing machine.

The method in question enables a printing path to be generated for an additive manufacturing machine with great flexibility, owing to the use of simple geometric entities (points, lines, surfaces and solids) to which a specific strategy and/or interaction with the basic 3D model is assigned (i.e. with a solid from which modelling starts), in particular for generating stiffening ribs, filling portions for increasing the support, ventilation and/or lightening holes and/or openings, local thickening/lightening of one or more walls, definition of the start and/or arrival of the printing layers, etc.

### Brief description of the drawings

The invention can be better understood and implemented with reference to the appended drawings that illustrate embodiments thereof by way of non-limiting example in which:
figures 1A to 1C show three steps in sequence of a first embodiment of an additive manufacturing method according to the present invention;
figures 2A to 2D show four steps in sequence of a second embodiment of an additive manufacturing method according to the present invention;

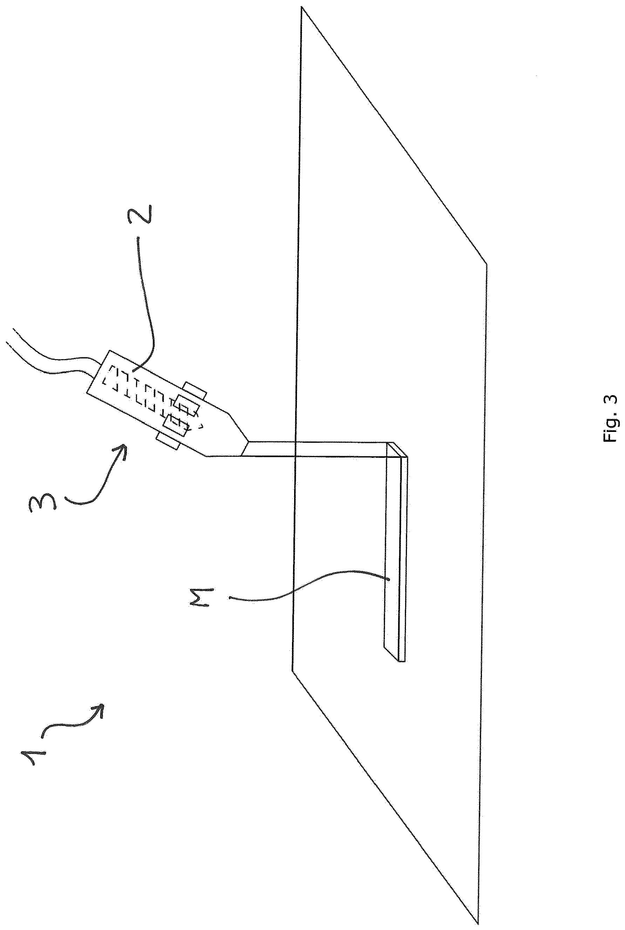

figure 3 shows a diagram of an additive manufacturing machine usable for implementing the method according to the present invention.

### Detailed description

With reference to the aforesaid figures, it is pointed out that for greater simplicity and clarity of exposition analogous elements of different embodiments have been shown by the same numbering.

An additive manufacturing method from a computer 3D model is disclosed. The method involves generating a printing path for an additive manufacturing machine 1 by a slicing software.

The additive manufacturing machine 1 may comprise, in particular, a screw extruder 2 configured to dispense plasticized material M from a dispensing outlet.

The additive manufacturing machine 1 may comprise, in particular, a support head 3 that supports the dispensing outlet and is moveable along one or more controlled movement axes.

The support head 3 may be controlled, in particular, by a numeric control system with three, or four or five controlled axes. The support head 3 may be controlled, in particular, with three linear controlled axes X, Y, Z. The support head 3 may be controlled, in particular, with a first controlled axis of rotation A or B or C. The support head 3 may be controlled, in particular, with a second controlled axis of rotation A or B or C.

The additive manufacturing machine 1 may comprise, in particular, control means configured to control the screw extruder 2 and the support head 3 by slicing software.

The (electronic and programmable) control means of the additive manufacturing machine 1 is so configured as to implement an additive manufacturing method according to the present invention.

The additive manufacturing method comprises the step of storing a library of geometric entities. The method comprises the step of defining a basic 3D model 4. The method comprises the step of selecting at least one of the aforesaid geometric entities.

The method comprises the step of intersecting the selected geometric entity with the basic 3D model 4 to obtain an intermediate 3D model 5. It is noted that the intermediate 3D model 5 could also comprise a set or a plurality of separate 3D models. In other words, an intermediate 3D model 5 may be considered to be both an object comprising a basic 3D model 4 that is separate from a selected geometric entity, and as a single object represented by the union of a basic 3D model 4 and of a selected geometric entity.

The method comprises the step of obtaining a working 3D model 7 from the intermediate 3D model 5. This step of obtaining a working 3D model 7 may be achieved by the slicing software. In particular, the slicing software may be configured to generate a printing path on the basis of one or more printing parameters and on the basis of the intermediate 3D model 5 or of the intermediate 3D models 5. The slicing software may be further configured to generate the working 3D model 7 (which represents the actual item to be printed by the additive manufacturing machine 1) on the basis of the aforesaid printing path.

The slicing software may be configured to convert the working 3D model 7 into commands for the additive manufacturing machine 1. In particular, defining the working 3D model 7 may define the movement of the support head 3 driven by the controlled axes. Further, the slicing software may be configured, in particular, also for determining the speed of the support head 3 and/or the speed of rotation of the screw of the screw extruder 2.

The intermediate 3D model 5 comprises at least one included portion of the geometric entity, i.e. a portion of the geometric entity that is included inside a volume of the basic 3D model 4.

The intermediate 3D model 5 could comprise at least one protruding portion of the geometric entity, i.e. a portion of the geometric entity that protrudes outside the volume of the basic 3D model 4 (even if the intermediate 3D model 5 does not necessarily have to comprise at least one protruding portion, the software is however configured to operate if this protruding portion is present).

The step of modifying the intermediate 3D model 5 comprises the step of not considering the protruding portion as a part to be printed, so that the working 3D model 7 will not include the protruding portion.

The method may comprise, in particular, the step of assigning to each geometric entity a functional category on the basis of which the aforesaid step of modifying the intermediate 3D model 5 is performed.

One of the aforesaid geometric entities may comprise, in particular, a surface 6 to which a functional category of stiffening rib is assigned.

When this surface 6, which is categorized as a stiffening rib, is selected and intersected with the basic 3D model 4 to obtain an intermediate 3D model 5, then the intermediate 3D model 5 obtained from this intersection is modified as the protruding portion of the aforesaid surface 6, i.e. the portion that protrudes beyond the volume of the basic 3D model 4, is not considered to be a portion to be printed.

The thus modified intermediate 3D model 5 (to obtain the working 3D model 7) will still be provided with the included portion of the aforesaid surface 6, which is categorized as a stiffening rib, whereas the protruding portion will be absent.

The aforesaid included portion is a portion that will remain included inside the volume of the working 3D model 7 and will in fact constitute a stiffening rib 8 of the working 3D model 7.

The method may comprise, in particular, the step of selecting two geometric entities each of which comprises a surface 6 to which a functional category of stiffening rib is assigned.

The method may comprise, in particular, the step of intersecting the two aforesaid surfaces 6 with the basic 3D model 4 to obtain an intermediate 3D model 5. The two surfaces 6 may be joined together by a third geometric entity (for example, another surface 9 or a line) that intersects the two surfaces 6 outside the volume of the basic 3D model 4.

Joining the two surfaces 6 by the third geometric entity, or joining or connecting geometric entity, will automatically cause (owing to the programming of the processing software of the method in question) a step of adding a joining wall 10 that joins together the two aforesaid surfaces 6 and is arranged inside the volume of the basic 3D model 4.

The joining wall 10 may comprise, in particular, a wall arranged contiguously with an outer wall of the basic 3D model 4, i.e. a wall that bounds the volume of the basic 3D model 4.

Adding the joining wall 10 enables a working 3D model 7 to be obtained that includes two stiffening ribs 8 that are constituted by the respective included portions of the aforesaid two surfaces 6, and further includes a joining wall 10 that joins together the two stiffening ribs 8.

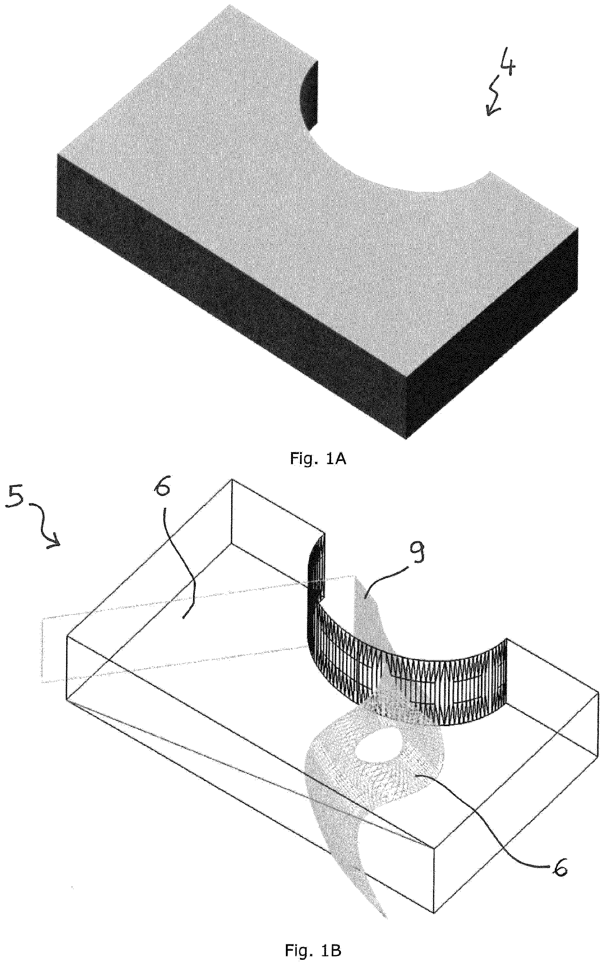

With reference to the specific embodiment of figures 1A to 1C, a basic 3D model, shown in figure 1A, has been indicated by 4.

In figure 1B, an intermediate 3D model 5 is illustrated that has been intersected with two geometric entities constituted by the two surfaces 6 to each of which the functional category of stiffening rib has been assigned. As seen from the embodiment of figure 1B, a surface 6 with the function of stiffening rib may be flat, or not flat, for example curved, also of complex shape, and may be further provided or not provided with lightening openings or holes.

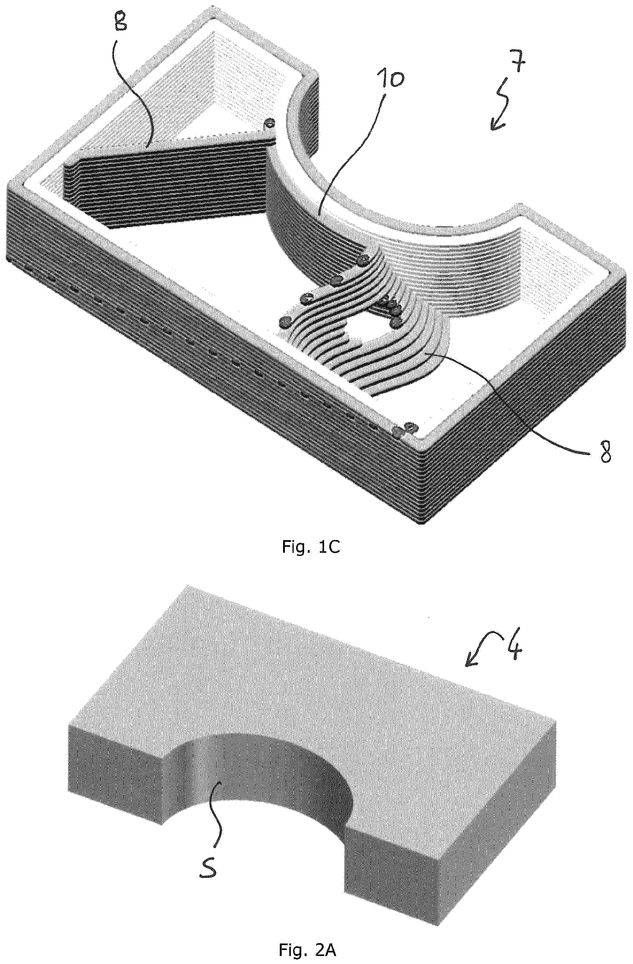

Further, a surface 6 with the function of stiffening rib cannot be as high as the rest of the model, as can be seen from the embodiment of figure 1C, in which a stiffening rib 8 (the flat rib in figure 1C, obtained from a flat surface 6) is higher than another stiffening rib 8 (the curved and perforated rib in figure 1C, obtained from a curved and perforated surface 6) and is also higher than the joining wall 10 (where the lack of two layers with respect to the higher stiffening rib 8 is visible above). It is thus possible, in general, to make a stiffening rib 8 the height of which is not constant and/or is not the same as other walls of the item, for example of an inner wall to which it is connected.

When a surface 6 with the function of stiffening rib is selected and intersected with the basic 3D model 4 (to obtain the intermediate 3D model 5), the surface 6 will have a protruding portion, i.e. surface portion that protrudes beyond the volume of the basic 3D model (see, for example, in figure 1B).

It is emphasized that in general the protruding portion may protrude beyond the volume of the basic 3D model 4 in any direction. Further, the protruding portion may protrude beyond the volume of the basic 3D model 4 for an unspecified length whatever the direction considered.

The intermediate 3D model 5 obtained from the intersection with the surfaces 6 with the function of stiffening ribs is modified as the protruding portion of the aforesaid surfaces 6 is not considered to be a portion to be printed. The aforesaid operation of not considering the protruding portion is run automatically by the application software of the method in question.

The included portion of each surface 6, i.e. the portion of the surface 6 that is included inside the volume of the basic 3D model 4 is considered to be a portion to be printed and will thus also remain in the working 3D model 7 (see figure 1C) which will be used by the slicing software to make the printing path. In particular, the included portion of each surface 6 will constitute a stiffening rib 8 of the working 3D model 7.

Again with reference to the specific embodiment of figures 1A-1C, the two surfaces 6 have been joined to one another by a third geometric entity (in this specific embodiment, a third surface 9 or joining or connecting surface) that intersects the two surfaces 6 outside the volume of the basic 3D model 4.

Joining the two surfaces 6 by the third geometric entity (i.e. the third surface 9), or joining or connecting geometric entity, will automatically cause (with an operation performed by the application software of the method in question) a step of adding a joining wall 10 that joins together the two aforesaid surfaces 6 and is arranged inside the volume of the basic 3D model 4.

The working 3D model 7 will accordingly comprise a joining wall 10 (see figure 1C) that joins together the two stiffening ribs 8. The joining wall 10 may be, in particular, arranged contiguously along an outer wall of the basic 3D model 4, i.e. a wall that bounds the volume of the basic 3D model and which may also be an outer wall of the working 3D model 7.

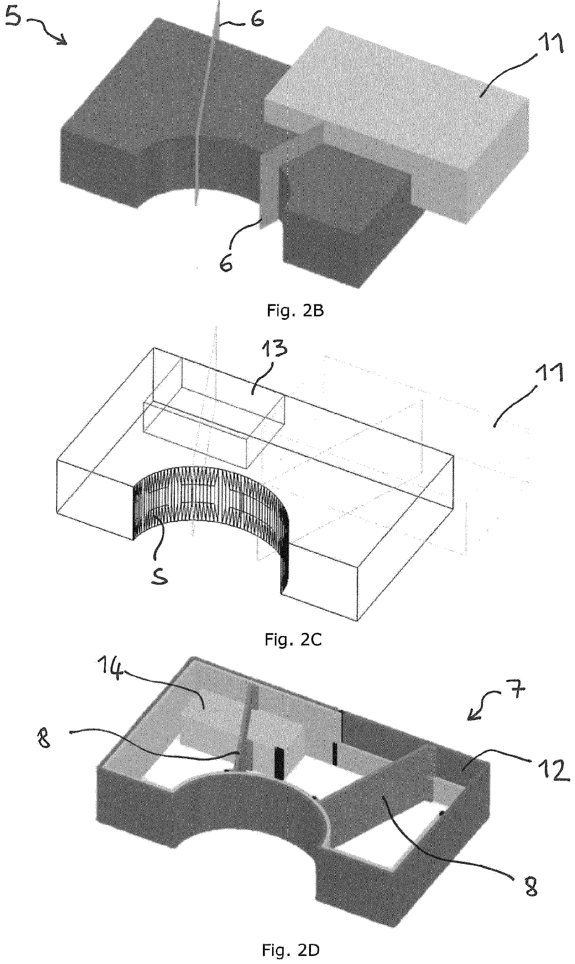

One of the aforesaid geometric entities may comprise, in particular, a first solid 11 (as will be illustrated below with reference to figures 2A to 2D) to which a functional category of reducing the number of passes is assigned, so that, when the first solid 11 is intersected at the basic 3D model 4, then the working 3D model 7 that is obtained will include a lightened zone 12 consisting of an included portion of the first solid 11 arranged inside a volume of the working 3D model 7.

The commands generated by the slicing software for the additive manufacturing machine 1 will be suitable for executing a number of layer deposition passes that is less in the lightened zone 12 than in other zones of the volume of the working 3D model 7.

It is possible, in particular, for at least one geometric entity of the library to comprise a second solid 13 (as will be illustrated below with reference to figures 2A to 2D) to which a functional support category is assigned. When the second solid 13 (associated with the functional support category) is intersected with the basic 3D model 4, then the commands generated by the slicing software for the additive manufacturing machine 1 will be suitable for filling the inner portion of the second solid 13, i.e. of an intersection volume between the second solid 13 and the basic 3D model 4.

Making specific reference now to the embodiment of figures 2A to 2D, the first solid to which the functional category of reducing the number of passes has been assigned has been indicated by 11. The first solid 11 has been intersected at the basic 3D model 4 and, accordingly, the working 3D model 7 that is obtained (figure 2D) will include a lightened zone 12 consisting of the included portion of the first solid 11 arranged inside the one volume of the working 3D model 7, so that the commands generated by the slicing software for the additive manufacturing machine 1 will be suitable for executing a number of layer deposition passes that is less in the lightened zone 12 than in other zones of the volume of the working 3D model 7 (in the specific embodiment of figure 2D, there is one pass in the lightened zone 12, whereas there are two or more passes in other zones).

Again with reference to the embodiment of figures 2A to 2D, the second solid to which a functional support category has been assigned has been indicated by 13. When the second solid 13 (with the function of support) is intersected with the basic 3D model 4, then the working 3D model 7 will comprise a zone of total filling with material in the included portion of the second solid 13 (where this included portion corresponds to the intersection volume between the second solid 12 and the basic 3D model).

This total filling with material constitutes a support 14 that will strengthen the working 3D model 7 in a desired zone.

In this case the slicing software will therefore generate commands for the additive manufacturing machine 1 that will be suitable for performing total filling with material in the inner portion of the second solid 13.

It is noted that the basic 3D model 4, from which the working 3D model 7 is generated, may comprise a work surface S from which it is possible to generate the basic 3D model 4. The work surface S may be, in particular, a guide surface for generating the basic 3D model 4.

The work surface S may be, in particular, present also in the working 3D model 7, as it represents a characteristic element of the product that has to be made with the additive manufacturing technique.

The work surface S may be, in particular, a shaped surface, for example a shaped surface of a mould, the shape of which represents one of the specific design features of the end product.

In other embodiments that are not illustrated the library may comprise, in particular, at least one geometric entity, for example a line, to which a start-of-layer functional category is assigned. When this last geometric entity is intersected with the basic 3D model, the commands generated by the slicing software for the additive manufacturing machine 1 will be suitable for performing a number of layer deposition passes that, at each pass, starts at the aforesaid geometric entity to which the start-of-layer functional category has been assigned.

The library may comprise, in particular, at least one geometric entity, for example a line, to which an end-of-layer functional category is assigned. When this last geometric entity is intersected with the basic 3D model the commands generated by the slicing software for the additive manufacturing machine 1 will be suitable for performing a number of layer deposition passes that, at each pass, ends at the aforesaid geometric entity to which the end-of-layer functional category has been assigned.

It is possible, in particular, for at least one geometric entity of the library to comprise a third solid to which a functional category of lightening window is assigned. When the third solid (associated with the functional category of lightening window) is intersected with the basic 3D model, then the commands generated by the slicing software for the additive manufacturing machine 1 will be suitable for making a lightening window at the intersection between the third solid and the basic 3D model.

The additive manufacturing method in question achieves the set objects, because, as has been seen, the intermediate 3D model 5 is formed simply and practically, intersecting the basic 3D model 4 with geometric elements selected from a library without the need to use geometric elements exactly sized with respect to the shape and dimensions of the basic 3D model 4.

It is in fact possible to use geometric elements with undefined dimensions or anyway oversized dimensions with respect to the basic 3D model 4, i.e. with at least one protruding portion protruding beyond the volume of the basic 3D model 4.

It is only necessary, during 3D modelling, to remember to position the selected geometric element in the desired zone of the basic 3D model 4, but without the obligation to make the edges of the geometric element coincide with the edges of the basic 3D model 4, as the geometric element selected and intersected with the basic 3D model 4 may have a protruding portion, i.e. a portion that exits also in an undefined manner, beyond the edges of the basic 3D model 4.

The protruding portion of the geometric element will be automatically considered by the processing software to be a part not to be printed, the software itself being programmed to perform this operation in the transition from the intermediate 3D model 5 to the working 3D model 7.

## Claims

1. Additive manufacturing method from a computer 3D model with which a print path for an additive manufacturing machine (1) is generated by a slicing software, wherein said method comprises the steps of:
- storing a library of geometric entities (6; 9; 11; 13);
- defining a basic 3D model (4);
- selecting at least one of said geometric entities;
- intersecting said selected geometric entity with said basic 3D model (4) to obtain at least one intermediate 3D model (5); and
- generating a print path using a slicing software which generates said print path based on said at least one intermediate 3D model (5) and based on at least one printing parameter;
- obtaining a working 3D model (7) from said printing path, wherein a slicing software can convert said 3D working model (7) into commands for an additive manufacturing machine (1);
wherein said intermediate 3D model (5) comprises at least one included portion of said geometric entity, which is included within a volume of said basic 3D model (4), and wherein said included portion is considered as a portion to be printed in said printing path, whereby said included portion is included in said working 3D model (7).

2. Method according to claim 1, wherein said intermediate 3D model (5) comprises at least one protruding portion of said geometric entity, which protrudes beyond said volume of said basic 3D model (4), and wherein said protruding portion is not considered as a portion to be printed in said printing path, whereby said protruding portion is not included in said working 3D model (7).

3. Method according to claim 1 or 2, comprising the step of assigning to each geometric entity a functional category on the basis of which said step of generating a print path is performed.

4. Method according to claim 3, wherein one of said geometric entities comprises a surface (6) to which a stiffening rib functional category is assigned, whereby said surface (6) is selected and intersected with said basic 3D model (4) to obtain an intermediate 3D model (5) in which a protruding portion of said surface (6), which protrudes beyond said volume of said basic 3D model (4), is considered as a portion not to be printed, and is considered as the portion to be printed an included portion of said surface (6) which is included within said volume of said working 3D model (7) and which constitutes a stiffening rib (8).

5. Method according to claim 4, wherein:
- said selecting step comprises selecting at least two geometric entities each of which comprises a surface (6) to which a functional category of stiffening rib is assigned;
- said intersecting step comprises intersecting said two surfaces (6) with said basic 3D model (4) to obtain said intermediate 3D model (5);
- a step is envisaged of joining said two surfaces (6) together by means of a third geometric entity (9) which intersects said two surfaces (6) outside said volume of said basic 3D model (4);
- the joining of said two surfaces (6) by means of said third geometric entity (9) causes a step of adding a joining wall (10) which joins said two surfaces (6) together and which is arranged inside said volume of said basic 3D model (4), whereby said working 3D model (7) will include two stiffening ribs (8), which are constituted by respective included portions of said two surfaces (6), and a joining wall (10) which joins said two stiffening ribs together (8).

6. Method according to any one of the preceding claims, wherein at least one of said geometric entities comprises a first solid (11) and wherein a functional category for reducing the number of passes is assigned to said first solid (11), whereby said working 3D model (7) includes a lightened area (12) consisting of an included portion of said first solid (11) arranged inside a volume of said basic 3D model (4) and the commands generated by said slicing software for said additive manufacturing machine (1) are suitable for performing a number of layer deposition passes which is lower in said lightened area (12) than in other areas of said volume.

7. Method according to any one of the preceding claims, wherein said library comprises at least one geometric entity, in particular a line, to which a start-of-layer functional category is assigned, whereby, when said geometric entity is intersected with said basic 3D model (4), the commands generated by said slicing software for said additive manufacturing machine (1) are suitable for executing a number of layer deposition passes which, for each pass, starts at said geometric entity to which said start-of-layer functional category has been assigned.

8. Method according to any one of the preceding claims, wherein said library comprises at least one geometric entity, in particular a line, to which an end-of-layer functional category is assigned, whereby, when said geometric entity is intersected with said basic 3D model (4), the commands generated by said slicing software for said additive manufacturing machine (1) are suitable for executing a number of layer deposition passes which, for each pass, ends up at said geometric entity to which said end-of-layer functional category has been assigned.

9. Method according to any one of the preceding claims, wherein at least one geometric entity of said library comprises a second solid (13) to which a support functional category is assigned, whereby, when said second solid (13) is intersected with said basic 3D model (4), the commands generated by said slicing software for said additive manufacturing machine (1) are suitable for filling an included portion of said second solid (13), i.e. an intersection volume between said second solid (13) and said basic 3D model (4), so that said filling generates a support (14) which strengthens said working 3D model (7).

10. Method according to any one of the preceding claims, wherein at least one geometric entity of said library comprises a third solid to which a functional category of lightening window is assigned, whereby, when said third solid is intersected with said basic 3D model (4), the commands generated by said slicing software for said additive manufacturing machine (1) are suitable for creating a lightening window at the intersection between said third solid and said basic 3D model (4).

11. Method according to any one of the preceding claims, wherein it is provided to select two or more of said geometrical entities, to intersect said two or more geometrical entities with said basic 3D model (4) to obtain two or more intermediate 3D models (5), and to use said two or more intermediate 3D models (5) to generate said printing path.

12. Additive manufacturing machine, comprising a screw extruder (2) for dispensing plasticized material from a dispensing outlet, a support head (3) which carries said dispensing outlet and which is movable along one or more controlled movement axes, and control means configured to control said screw extruder (2) and said support head (3) by means of a slicing software, said control means being configured so as to implement an additive manufacturing method according to any one of the preceding claims
